# EUROPÄISCHE PATENTSCHRIFT

(11) **EP 3 064 858 B1**
(45) Veröffentlichungstag und Bekanntmachung des Hinweises auf die Patenterteilung: **19.12.2018**
(21) Anmeldenummer: 16158646.6
(22) Anmeldetag: 04.03.2016
(51) Int. Cl.: H02J 3/38, F24H 9/20, F24D 17/00, F24D 19/10, H02J 3/00

(54) **SYSTEM ZUR BELADUNG EINES WARMWASSERSPEICHERS**
SYSTEM FOR LOADING A WARM WATER BOILER
SYSTEME DE CHARGEMENT D'UN BALLON D'EAU CHAUDE

(30) Priorität: 06.03.2015 DE 202015001807 U
(43) Veröffentlichungstag der Anmeldung: 07.09.2016
(73) Patentinhaber: Gebr. Tuxhorn GmbH & Co. KG, 33659 Bielefeld (DE)
(72) Erfinder: Imrecke, Peter, 33619 Bielefeld (DE); Thole, Frank, 33739 Bielefeld (DE)
(74) Vertreter: Behr, Wolfgang

(56) Entgegenhaltungen:
- EP-A2- 2 610 999
- DE-A1-102012 112 962
- DE-A1-102013 007 087

## Beschreibung

Die vorliegende Erfindung betrifft ein System zur Nutzung der von einem hauseigenen Energieerzeuger zur Verfügung gestellten elektrischen Leistung zur Beladung eines Warmwasserspeichers. Insbesondere kann das System dabei zur Nutzung der von einer hauseigenen Photovoltaikanlage zur Verfügung gestellten elektrischen Leistung genutzt werden.

Photovoltaikanlagen wurden für einige Jahre staatlich bezuschusst. Zum einen bestand dabei eine Einspeisevergütung für die von der Photovoltaikanlage erzeugte und ins öffentliche Stromnetz eingespeiste Leistung. In einer späteren Stufe wurde dagegen zumindest ein gewisser Anteil an Eigennutzung gefördert, um staatliche Unterstützung in Anspruch nehmen zu können. Durch das weitgehende Auslaufen der Einspeisevergütungen ist heutzutage die Einspeisung des selbst erzeugten Stroms in das öffentliche Stromnetz kaum noch rentabel. Das Ziel beim Einbau einer neuen Photovoltaikanlage oder bei der Umrüstung einer bestehenden Photovoltaikanlage besteht daher darin, über die Photovoltaikanlage den Eigenbedarf möglichst gut abzudecken, und nur noch möglichst wenig Strom aus dem öffentlichen Stromnetz beziehen zu müssen und weniger einzuspeisen. Die gleichen Anforderungen gelten auch für andere hauseigene Energieerzeuger.

Dabei sind aus dem Stand der Technik bereits einige Ansätze bekannt, wie der von einer Photovoltaikanlage zur Verfügung gestellte, von den übrigen Verbrauchern im Hausnetz nicht genutzte Strom in Wärme umgewandelt werden kann und beispielsweise bei der Brauchwassererwärmung oder der Heizung eingesetzt werden kann. Bekannte Systeme haben jedoch teilweise das Problem, dass in Phasen, in welchen die Photovoltaikanlage keinen oder nicht genügend Strom erzeugt, zusätzliche Leistung aus dem öffentlichen Stromnetz für die Warmwassererzeugung abgezogen wird, was unerwünscht ist. Zum anderen ist die Anbindung an die bestehende Warmwasseranlage oft nicht ohne größere Umrüstung möglich bzw. wird die Wärme nicht auf einem nutzbaren Temperaturniveau zur Verfügung gestellt.

Ein System gemäß der Oberbegriffe von Anspruch 1,4,6 und 7 ist aus der Druckschrift DE 10 2012 112 962 A1 bekannt.

Die Aufgabe der vorliegenden Erfindung ist es daher, ein System zur Nutzung der von einem hauseigenen Energieerzeuger zur Verfügung gestellten elektrischen Leistung zur Beladung eines Warmwasserspeichers weiterzuentwickeln.

Diese Aufgabe wird erfindungsgemäß durch die Systeme gemäß den unabhängigen Ansprüchen gelöst. Bevorzugte Ausgestaltungen der vorliegenden Erfindung sind Gegenstand der Unteransprüche.

Das erfindungsgemäße System dient dabei der Nutzung der von einem hauseigenen Energieerzeuger zur Verfügung gestellten elektrischen Leistung zur Beladung eines Warmwasserspeichers. Bei dem hauseigenen Energieerzeuger kann es sich dabei insbesondere um eine Photovoltaikanlage handeln. Insbesondere kann es sich dabei um eine Photovoltaikanlage handeln, welche über einen Wechselrichter mit dem Hausnetz in Verbindung steht. Bei dem Warmwasserspeicher kann es sich insbesondere um einen Speicher eines Brauchwassersystems und / oder des Heizungssystems handeln. Das erfindungsgemäße System umfasst dabei einen Warmwasserspeicher mit einem Speicher-Temperatursensor, eine Elektroheizeinheit mit einem an den Warmwasserspeicher anschließbaren Hydraulikkreislauf, in welchem eine Umwälzpumpe, ein elektrischer Durchlauferhitzer und ein Ziel-Temperatursensor angeordnet sind, und eine Steuerung, welche mit einem Leistungssensor verbindbar ist, welcher zwischen einem Hausnetz, an welchem der hauseigene Energieerzeuger und ein oder mehrere hauseigene Verbraucher angeschlossen sind, und einem öffentlichen Stromnetz angeordnet ist, und welcher zumindest die vom Hausnetz in das öffentliche Stromnetz abgegebene Leistung misst. Dabei weist die Steuerung eine Heiz-Steuerfunktion zur Ansteuerung der dem elektrischen Durchlauferhitzer zugeführten elektrischen Leistung anhand der Messwerte des Leistungssensors und eine Pumpen-Steuerfunktion zur Ansteuerung der Umwälzpumpe anhand der Messwerte des Ziel-Temperatursensors auf. Die Steuerung ist weiterhin mit dem Speicher-Temperatursensor verbunden, und die Pumpen-Steuerfunktion nimmt die Ansteuerung der Umwälzpumpe anhand der Messwerte des Ziel-Temperatursensors und der Messwerte des Speicher-Temperatursensors vor.

Das erfindungsgemäße System ermöglicht damit eine optimale Anbindung an ein bestehendes Brauchwasser- und / oder Heizungssystem, und erlaubt es, die von dem hauseigenen Energieerzeuger zur Verfügung gestellte elektrische Leistung in Abhängigkeit von der Leistung, welche von dem Hausnetz in das öffentliche Stromnetz eingespeist wird, über die Elektroheizeinheit in Wärme umzuwandeln und hierüber den Warmwasserspeicher zu beladen. Die erfindungsgemäße Ausgestaltung der Elektroheizeinheit mit einem Durchlauferhitzer, einer Umwälzpumpe und einem Zieltemperatursensor erlaubt dabei zusammen mit der Pumpen-Steuerfunktion eine ordnungsgemäße Beladung des Warmwasserspeichers. Hierdurch kann die in Wärme umgewandelte elektrische Leistung optimal und/oder auf einem nutzbaren Temperaturniveau genutzt werden. Erfindungsgemäß nehmen die Heiz-Steuerfunktion und die Pumpen-Steuerfunktion die Ansteuerung dabei automatisch vor.

Durch die von dem Leistungssensor zur Verfügung gestellten Daten kann die von dem hauseigenen Energieerzeuger zur Verfügung gestellte elektrische Leistung optimal genutzt werden. Weiterhin kann verhindert werden, dass unnötigerweise Energie aus dem öffentlichen Stromnetz bezogen wird. Der Leistungssensor ist dabei bevorzugt so ausgestaltet, dass er sowohl die Richtung, als auch den Betrag der Leistung, welche zwischen dem Hausnetz und dem öffentlichen Stromnetz ausgetauscht wird, messen kann. Weiterhin bevorzugt kann es sich um einen 3-Phasen-Leistungssensor handeln.

Der erfindungsgemäße Aufbau hat den weiteren Vorteil, dass der Anschluss des elektrischen Durchlauferhitzers in gleicher Weise wie für jeden anderen Verbraucher an beliebiger Stelle im Hausnetz erfolgen kann, und keine separate Verbindung zu dem hauseigenen Energieerzeuger benötigt wird. Vielmehr kann der hauseigene Energieerzeuger wie ohnehin üblich über einen Wechselrichter mit dem Hausnetz in Verbindung stehen und die von ihm erzeugte Leistung in das Hausnetz einspeisen. Das erfindungsgemäße System steht an beliebiger anderer Stelle mit dem Hausnetz in Verbindung, und entnimmt anhand der Messwerte des Leistungssensor eine entsprechende Leistung aus dem Hausnetz, welche dann im elektrischen Durchlauferhitzer in Wärme umgewandelt wird.

Der elektrische Durchlauferhitzer kann ein Druck-Gehäuse sein, welches einen Einlass und einen Auslass aufweisen, mit welchem er in den Hydraulikkreislauf eingefügt wird. Weiterhin kann der elektrische Durchlauferhitzer einen oder mehrere elektrische Heizelemente aufweisen, welche mit dem Druckbehälter in thermischem Kontakt stehen oder innerhalb des Druckbehälters angeordnet sind, und die von ihnen erzeugte Wärme an das durch den Druckbehälter fließende Wasser abgeben.

Der Zieltemperatursensor ist dabei bevorzugt oberhalb des elektrischen Durchlauferhitzers im Hydraulikkreislauf angeordnet, und misst dabei die Temperatur des Wassers am Ausgang des elektrischen Durchlauferhitzers.

Bevorzugt steuert die Heiz-Steuerfunktion anhand der Messwerte des Leistungssensors die Leistung des elektrischen Durchlauferhitzers so an, dass sie im Wesentlichen der von dem hauseigenen Energieerzeuger zur Verfügung gestellten, von den Verbrauchern im Haushalt nicht genutzten elektrischen Leistung entspricht. Die Heiz-Steuerfunktion sorgt damit dafür, dass nur die überschüssige, im Hausnetz nicht genutzte Leistung in Wärme umgewandelt wird, nicht aber zusätzlich aus dem öffentlichen Stromnetz Energie bezogen wird.

Weiterhin kann vorgesehen sein, dass die Heiz-Steuerfunktion eine Heiz-Regelungsfunktion umfasst, welche durch Ansteuerung der dem elektrischen Durchlauferhitzer zugeführten elektrischen Leistung die vom Hausnetz an das öffentliche Netz abgegebene Leistung auf einen Zielwert von 0 regelt. Erkennt die Heiz-Regelungsfunktion daher anhand der Daten des Leistungssensors, dass aus dem Hausnetz in das öffentliche Stromnetz Leistung abgegeben wird, wird die dem elektrischen Durchlauferhitzer zugeführte elektrische Leistung erhöht. Erkennt die Heiz-Regelungsfunktion dagegen, dass Strom aus dem öffentlichen Stromnetz abgezogen wird, wird die dem elektrischen Durchlauferhitzer zugeführte elektrische Leistung verringert.

Weiterhin kann die Heiz-Regelungsfunktion durch Ansteuerung der dem elektrischen Durchlauferhitzer zugeführten elektrischen Leistung zwischen dem Hausnetz und dem öffentlichen Netz ausgetauschte Leistung mit einem Zielwert von 0 regeln. So kann vorgesehen sein, dass die Heiz-Regelungsfunktion die dem elektrischen Durchlauferhitzer zugeführte elektrische Leistung auf 0 setzt, wenn die von den Verbrauchern verbrauchte Leistung die von dem hauseigenen Energieerzeuger zur Verfügung gestellte Leistung übersteigt. Hierdurch wird sichergestellt, dass zum Beheizen des Wassers tatsächlich nur überschüssige Energie des hauseigenen Energieerzeugers genutzt wird. Umgekehrt wird möglichst viel der von der Photovoltaikanlage erzeugten, im Hausnetz nicht anderweitig genutzten Leistung in thermische Energie umgewandelt und eingelagert.

Die genaue Art der Ansteuerung des elektrischen Durchlauferhitzers kann dabei je nach Anwendungsfall und elektromechanischem Aufbau des elektrischen Durchlauferhitzers unterschiedlich gestaltet sein. In einer möglichen Ausführungsform kann die Ansteuerung dabei gestuft erfolgen, beispielsweise indem je nach zur Verfügung stehender Leistung eine oder mehrere Heizelemente des elektrischen Durchlauferhitzers ein- bzw. ausgeschaltet werden. In diesem Fall werden die elektrischen Heizelemente bevorzugt so zu- bzw. abgeschaltet, dass die von den elektrischen Heizelementen insgesamt verbrauchte Leistung möglichst nahe an die zur Verfügung stehende Überschussleistung heranreicht, ohne diese jedoch zu übersteigen.

Alternativ oder zusätzlich kann eine stufenlose Leistungsregelung für das oder die elektrischen Heizelemente des elektrischen Durchlauferhitzers vorgesehen sein. Hierdurch kann die dem elektrischen Durchlauferhitzer zugeführte Leistung der zur Verfügung stehenden Überschussleistung genau nachgeführt werden.

Weiterhin kann vorgesehen sein, dass die Ansteuerung des elektrischen Durchlauferhitzers über eine stufenlose Leistungsmodulation der ohmschen Last des Durchlauferhitzers erfolgt. Weiterhin kann ein von der Steuerung angesteuerter elektrischer Leistungsteil zur Modulation der dem elektrischen Durchlauferhitzer zur Verfügung stellten Leistung vorgesehen sein.

Erfindungsgemäß umfasst die Pumpen-Steuerfunktion eine Drehzahl-Regelungsfunktion, welche die Drehzahl der Umwälzpumpe anhand der Messwerte des Zieltemperatursensors so ansteuert, dass die von dem Zieltemperatursensor gemessene Temperatur einer vorgegebenen Zieltemperatur entspricht. Die Drehzahlregelung erlaubt eine genaue Zufuhr des Wassers zum Warmwasserspeicher mit der vorgegebenen Zieltemperatur. Hierdurch wird verhindert, dass die Schichtung des Warmwasserspeichers durch die Zuführung von Wasser mit einer unpassenden Temperatur zerstört wird.

Die Zieltemperatur liegt bevorzugt oberhalb der Solltemperatur eines konventionellen Wärmeerzeugers, welcher neben der Elektro-Heizeinheit zum Beladen des Warmwasserspeichers eingesetzt wird. Hierdurch erzeugt die Elektro-Heizeinheit direkt nutzbare Wärme und spart konventionelle Energie ein.

Bevorzugt ist die Zieltemperatur dabei an der Steuerung einstellbar. Die Zieltemperatur kann dabei beispielsweise einen voreingestellten Wert aufweisen, und an der Steuerung innerhalb eines vorgegebenen Wertebereiches geändert werden. Eine typische Zieltemperatur liegt dabei beispielsweise in einem Bereich von 65°C bis 75°C, insbesondere bei 70°C, also oberhalb der vom konventionellen Wärmeerzeuger gehaltenen Solltemperatur. Insbesondere ist dabei eine Zieltemperatur in einem Bereich von 65°C bis 75°C voreingestellt.

Die erfindungsgemäß vorgesehene Pumpen-Steuerfunktion mit einer Drehzahl-Regelungsfunktion für die Umwälzpumpe ist dabei auch unabhängig von der Ansteuerung des elektrischen Durchlauferhitzers über die Heiz-Steuerfunktion von Vorteil, da sie auch unabhängig von der konkreten Ansteuerung der im elektrischen Durchlauferhitzer verbrauchten elektrischen Leistung eine zuverlässige Abführung der so erzeugten Wärme und eine entsprechende Beladung des Warmwasserspeichers erlaubt.

Die vorliegende Erfindung umfasst daher in einem zweiten, unabhängigen Aspekt ein System zur Nutzung der von einem hauseigenen Energieerzeuger zur Verfügung gestellten elektrischen Leistung zur Beladung eines Warmwasserspeichers, welches einen Warmwasserspeicher mit einem Speicher-Temperatursensor, eine Elektroheizeinheit mit einem an den Warmwasserspeicher anschließbaren Hydraulikkreislauf, in welchem eine Umwälzpumpe, ein elektrischer Durchlauferhitzer und ein Ziel-Temperatursensor angeordnet sind, und eine Steuerung mit einer Pumpen-Steuerfunktion zur Ansteuerung der Umwälzpumpe anhand der Messwerte des Ziel-Temperatursensors umfasst. Die Pumpen-Steuerfunktion weist dabei eine Drehzahl-Regelungsfunktion auf, die die Drehzahl der Umwälzpumpe anhand der Messwerte des Ziel-Temperatursensors so ansteuert, dass die von dem Ziel-Temperatursensor gemessene Temperatur einer vorgegebenen Zieltemperatur entspricht. Die Steuerung ist weiterhin mit dem Speicher-Temperatursensor verbunden, und die Pumpen-Steuerfunktion nimmt die Ansteuerung der Umwälzpumpe anhand der Messwerte des Ziel-Temperatursensors und der Messwerte des Speicher-Temperatursensors vor.

Auch durch dieses System ergeben sich die bereits oben im Hinblick auf die Pumpen-Steuerfunktion dargestellten Vorteile. Als hauseigener Energieerzeuger kann auch bei diesem System bevorzugt eine Photovoltaikanlage dienen. Bevorzugt steht diese über einen Wechselrichter mit dem Hausnetz in Verbindung. Bevorzugt ist dabei auch das System gemäß dem zweiten Aspekt an das Hausnetz angeschlossen. Weiterhin kann auch hier eine Heiz-Steuerfunktion zur Ansteuerung der dem elektrischen Durchlauferhitzer zugeführten elektrischen Leistung eingesetzt werden. Diese muss jedoch nicht notwendigerweise so aufgebaut sein und so arbeiten, wie dies bereits oben im Hinblick auf den ersten Aspekt der vorliegenden Erfindung näher dargestellt wurde.

Bevorzugt ist die Pumpen-Steuerfunktion und die Elektroheizeinheit dabei jedoch so aufgebaut, wie dies bereits oben näher beschrieben wurde. Insbesondere kann die Zieltemperatur dabei bevorzugt einstellbar sein und/oder liegt oberhalb der Solltemperatur eines konventionellen Wärmeerzeugers.

Im Folgenden werden nun bevorzugte Aspekte sowohl des Systems gemäß dem ersten, als auch gemäß dem zweiten Aspekt näher dargestellt:
Insbesondere kann die Drehzahl-Regelungsfunktion die Drehzahl der Umwälzpumpe anhand der Messwerte des Zieltemperatursensors innerhalb eines vorgegebenen Drehzahlbereiches einstellen. Insbesondere kann dabei eine Minimaldrehzahl und / oder eine Maximaldrehzahl vorgegeben sein. Durch entsprechende Erhöhung bzw. Verringerung der Drehzahl der Umwälzpumpe innerhalb des vorgegebenen Drehzahlbereiches wird die Umwälzpumpe dabei bevorzugt so angesteuert, dass die von dem Zieltemperatursensor gemessene Temperatur der vorgegebenen Zieltemperatur entspricht.

Gemäß einem weiteren Aspekt der vorliegenden Erfindung wird die Ansteuerung der Umwälzpumpe und insbesondere die Regelungsfunktion aktiviert bzw. deaktiviert, wenn die von dem Zieltemperatursensor gemessene Temperatur eine vorgegebene Einschaltbedingung bzw. Ausschaltbedingung erfüllt, wobei die Einschaltbedingung bzw. Ausschaltbedingung eine Bedingung relativ zur von dem Speichertemperatursensor gemessenen Temperatur umfassen kann.

Hierbei ist ein einer ersten Variante vorgesehen, dass die Pumpen-Steuerfunktion die Ansteuerung der Umwälzpumpe und insbesondere die Drehzahl-Regelungsfunktion aktiviert, wenn die von dem Zieltemperatursensor gemessene Temperatur eine vorgegebene Einschaltbedingung relativ zur von dem Speichertemperatursensor gemessenen Temperatur erfüllt. Insbesondere kann dabei eine Aktivierung erfolgen, wenn die von dem Zieltemperatursensor gemessene Temperatur größer ist als die von dem Speichertemperatursensor gemessene Temperatur und/oder eine Minimaltemperatur.

In einer zweiten Variante ist vorgesehen, dass die Pumpen-Steuerfunktion die Ansteuerung der Umwälzpumpe und insbesondere die Drehzahl-Regelungsfunktion deaktiviert, wenn die von dem Zieltemperatursensor gemessene Temperatur eine vorgegebene Ausschaltbedingung relativ zur von dem Speichertemperatursensor gemessenen Temperatur erfüllt. Insbesondere kann die Deaktivierung erfolgen, wenn die von dem Zieltemperatursensor gemessene Temperatur kleiner ist als die von dem Speichertemperatursensor gemessene Temperatur und/oder eine Minimaltemperatur.

Die Steuerung kann weiterhin eine Temperatur-Abschaltungsfunktion umfassen, welche die Stromzufuhr zum elektrischen Durchlauferhitzer unterbricht, wenn die von einem Temperatursensor gemessene Temperatur eine Abschalt-Temperatur überschreitet. Insbesondere kann es sich bei dem Temperatursensor um den Zieltemperatursensor und/oder einen Speicher-Temperatursensor handeln.

Dabei kann ein Schaltschütz vorgesehen sein, welcher von der Temperatur-Abschaltungsfunktion angesteuert wird. Dieser kann beispielsweise in der Verbindungsleitung zwischen dem Hausnetz und dem elektrischen Durchlauferhitzer angeordnet sein. Alternativ kann die Leistungsmodulation auf 0 reduziert werden.

Die Temperatur-Abschaltungsfunktion ist bevorzugt so ausgestaltet, dass sie die Stromzufuhr zur Umwälzpumpe und zur Steuerung nicht abschaltet und/oder die Ansteuerung der Umwälzpumpe durch die Pumpen-Steuerfunktion nicht abschaltet.

Bevorzugt ist die Temperatur-Abschaltungsfunktion dabei so ausgeführt, dass sie die Ansteuerung der Umwälzpumpe durch die Pumpen-Steuerfunktion nicht direkt beeinflusst. Insbesondere ist die Temperatur-Abschaltungsfunktion dabei so ausgestaltet, dass die Umwälzpumpe auch im Falle einer Temperatur-Abschaltung des Durchlauferhitzers weiterarbeitet, bis die von dem Zieltemperatursensor gemessene Temperatur unter die von dem Speichertemperatursensor gemessene Temperatur fällt. Durch diese Ausgestaltung wird ein Nachlauf für die Umwälzpumpe zur Verfügung gestellt, welcher eine Überhitzung des Durchlauferhitzers verhindert.

Weiterhin bevorzugt arbeiten die Heiz-Steuerfunktion und die Pumpen-Steuerfunktion auch sonst unabhängig voneinander. Insbesondere ist dabei erfindungsgemäß keine Kommunikation zwischen der Heiz-Steuerfunktion und der Pumpen-Steuerfunktion vorgesehen. Vielmehr erfolgt bevorzugt die Ansteuerung über die Pumpen-Steuerfunktion allein auf Grundlage der Messwerte eines oder mehrerer Temperatursensoren und damit ohne eine unmittelbare Ansteuerung durch die Heiz-Steuerfunktion.

Der Hydraulikkreislauf des erfindungsgemäßen Systems kann weiterhin Absperrkugelhähne und / oder ein Sicherheitsventil und / oder eine Schwerkraftbremse aufweisen. Die Absperrkugelhähne erlauben dabei eine einfache Montage und Demontage der Komponenten des Hydraulikkreislaufs. Das Sicherheitsventil verhindert, dass bei einem Betrieb des elektrischen Durchlauferhitzers bei versehentlich nicht geöffneten Absperrkugelhähnen ein unzulässiger Überdruck entsteht. Die Schwerkraftbremse verhindert, dass sich im ausgeschalteten Zustand der Elektroheizeinheit ein Rückstrom oder thermische Zirkulation durch den Hydraulikkreislauf ergibt, welcher die Schichtung im Speicher zerstören würde. Weiter verhindert die Schwerkraftbremse einen thermischen Auftrieb durch den Durchlauferhitzer, wodurch der Zieltemperatursensor die Temperatur des Durchlauferhitzers bei ausgeschalteter Pumpe besser messen kann.

Weiterhin kann ein Sicherheitstemperaturbegrenzer vorgesehen sein. Bevorzugt ist dieser mit einem am oder im Durchlauferhitzer angeordneten Sicherheits-Temperaturfühler verbindbar und schaltet die Stromzufuhr zum Durchlauferhitzer ab, wenn die von dem Sicherheits-Temperaturfühler gemessene Grenztemperatur übersteigt. Auch der Sicherheitstemperaturbegrenzer kann einen Schaltschütz umfassen, welcher beispielsweise in der Verbindungsleitung zwischen dem Hausnetz und dem elektrischen Durchlauferhitzer angeordnet sein kann. Der Sicherheitstemperaturbegrenzer ist wie die Temperatur-Abschaltungsfunktion bevorzugt so ausgestaltet, dass er die Stromzufuhr zur Umwälzpumpe und zur Steuerung nicht abschaltet und/oder die Ansteuerung der Umwälzpumpe durch die Pumpen-Steuerfunktion nicht abschaltet. So wird auch hier eine Nachlauffunktion realisiert.

Das erfindungsgemäße System kann weiterhin einen weiteren Leistungssensor zur Messung der von dem hauseigenen Energieerzeuger erzeugten Leistung aufweisen und/oder die Steuerung kann mit einem solchen verbindbar sein. Ein solcher Leistungssensor ist jedoch nicht zwingend notwendig, da die Ansteuerung der dem elektrischen Durchlauferhitzer zugeführten elektrischen Leistung durch die Heiz-Steuerfunktion bevorzugt allein anhand der Messwerte des zwischen Hausnetz und öffentlichem Stromnetz angeordneten Leistungssensors erfolgt. Die vom hauseigenen Energieerzeuger erzeugte Leistung kann jedoch beispielsweise zu Anzeigezwecken gemessen werden.

Das erfindungsgemäße System kann dabei eine Anzeigeeinheit zur Anzeige und / oder Visualisierung der von dem hauseigenen Energieerzeuger erzeugten und / oder von den Verbrauchern verbrauchten und / oder der dem elektrischen Durchlauferhitzer zugeführten elektrischen Leistung aufweisen. Hierdurch kann der Nutzer des Systems erkennen, ob gerade Energie gespeichert wird bzw. wieviel Energie von dem hauseigenen Energieerzeuger zur Verfügung gestellt wird.

Die Steuerung kann weiterhin eine Anzeigeeinheit und/oder Eingabeelemente umfassen. Die Anzeigeeinheit kann dabei Betriebsparameter der Steuerung und/oder des Systems anzeigen. Die Eingabeelemente erlauben bevorzugt die Einstellung von Betriebsparametern der Steuerung und/oder des Systems.

Die Steuerung ist bevorzugt als ein zentraler Regler ausgestaltet. Die Steuerung kann jedoch auch mehrere separate Steuerungskomponenten umfassen, beispielsweise eine erste Steuerungskomponente, welche die Heiz-Steuerungsfunktion implementiert, und eine zweite Steuerungskomponente, welche die Pump-Steuerungsfunktion implementiert. Dies ist insbesondere deshalb möglich, weil beide Funktionen unabhängig voneinander arbeiten und nicht miteinander kommunizieren. Bevorzugt ist jedoch nur eine gemeinsame Steuerungskomponente vorgesehen.

Weiterhin kann vorgesehen sein, dass die Heiz-Steuerfunktion der Steuerung einen separaten Leistungsteil ansteuert. Dieser kann insbesondere die Leistungselektronik und/oder die Schaltschütze zur Ansteuerung des Durchlauferhitzers umfassen.

Das erfindungsgemäße System kann weiterhin einen Stromzähler aufweisen, mit welchem die in das öffentliche Stromnetz eingespeiste und die aus diesem bezogene Energiemenge registriert wird.

Das erfindungsgemäße System kann weiterhin den Leistungssensor umfassen, welcher zwischen dem Hausnetz und dem öffentlichen Stromnetz angeordnet werden kann. In einer möglichen Ausführungsform kann das erfindungsgemäße System jedoch auch an einen bereits vorhandenen Leistungssensor angeschlossen werden.

Das erfindungsgemäße System kann weiterhin den Warmwasserspeicher umfassen oder an einen bereits vorhandenen Warmwasserspeicher angeschlossen werden.

Das erfindungsgemäße System kann weiterhin eine Abdeckung für das Hydrauliksystem, die Steuerung und/oder das Leistungsteil aufweisen. Bevorzugt handelt es sich dabei um eine gemeinsame Abdeckung für das Hydrauliksystem, die Steuerung und das Leistungsteil.

Die Abdeckung kann dabei als Dämmungsabdeckung ausgestaltet sein, d. h. insbesondere der thermischen Dämmung des Hydrauliksystems und insbesondere der thermischen Dämmung des elektrischen Durchlauferhitzers dienen. Bevorzugt ist die Abdeckung dabei so ausgestaltet, dass sie die Steuerung und/oder das Leistungsteil thermisch gegenüber dem elektrischen Durchlauferhitzer dämmt. Hierdurch wird eine Überhitzung der elektronischen Komponenten vermieden.

Die Steuerung kann dabei ein Steuerungsprogramm umfassen, welche die erfindungsgemäßen Funktionen implementiert. Insbesondere kann die Steuerung dabei so programmiert sein, dass sie die Ansteuerung der Elektroheizeinheit automatisch anhand der Sensordaten durchführt.

Neben dem erfindungsgemäßen System umfasst die vorliegende Erfindung auch die Komponenten dieses Systems, welche oben näher beschrieben wurden. Insbesondere umfasst die vorliegende Erfindung dabei eine Steuerung gemäß Anspruch 13.

Insbesondere sind die Heiz-Steuerfunktion und die Pumpen-Steuerfunktion dabei so ausgestaltet, wie dies bereits oben näher dargelegt wurde.

Die Steuerung kann dabei insbesondere ein Leistungsteil umfassen, welches bevorzugt als separate Baueinheit ausgeführt ist.

Die vorliegende Erfindung umfasst weiterhin eine Hausinstallation mit einem erfindungsgemäßen System, wie es oben beschrieben wurde.

Die Hausinstallation umfasst bevorzugt weiterhin einen zwischen dem Hausnetz und dem öffentlichen Stromnetz angeschlossenen Leistungssensor und/oder einen Warmwasserspeicher und/oder einen hauseigenen Energieerzeuger.

Die vorliegende Erfindung wird nun anhand eines Ausführungsbeispiels und Zeichnungen näher beschrieben.

Dabei zeigt:
- Fig. 1:: eine schematische Darstellung eines Ausführungsbeispiels einer erfindungsgemäßen Hausinstallation, bei welchem ein Ausführungsbeispiel eines erfindungsgemäßen Systems zum Einsatz kommt,
- Fig. 2:: eine schematische Darstellung eines Ausführungsbeispiels des erfindungsgemäßen Systems,
- Fig. 3:: eine perspektivische Darstellung eines Ausführungsbeispiels des erfindungsgemäßen Systems, und
- Fig. 4:: das in Fig. 3 gezeigte Ausführungsbeispiel mit einer Abdeckung.

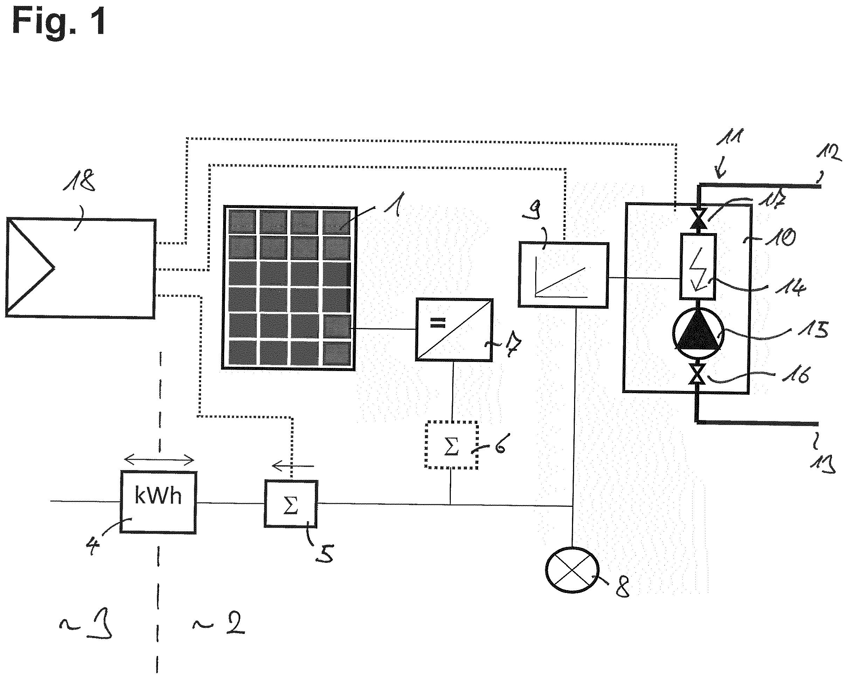

Fig. 1 zeigt ein Hausnetz 2, bei welchem ein Ausführungsbeispiel eines erfindungsgemäßen Systems zur Nutzung der von einem hauseigenen Energieerzeuger 1, im vorliegenden Fall einer Photovoltaikeinheit, zur Verfügung gestellten Leistung zur Beladung eines in Fig. 1 nicht gezeigten Warmwasserspeichers eingesetzt wird.

Der hauseigene Energieerzeuger 1 steht dabei über den Wechselrichter 7 mit dem Hausnetz 2 in Verbindung. Optional kann dabei ein Leistungssensor 6 vorgesehen sein, welcher die von dem hauseigenen Energieerzeuger zur Verfügung gestellte elektrische Leistung misst. Die Messsignale eines solchen optionalen Leistungssensors 6 werden im Rahmen der vorliegenden Erfindung jedoch nicht benötigt, um die einzelnen Komponenten des Systems anzusteuern. Ggf. können sie jedoch zu Anzeigezwecken genutzt werden.

An das Hausnetz 2 sind weiterhin einer oder mehrere Verbraucher 8 angeschlossen, beispielsweise Haushaltsgeräte und die Lichtinstallation. Da die von dem hauseigenen Energieerzeuger zur Verfügung gestellte elektrische Leistung jedoch üblicherweise nicht der tatsächlich von den Verbrauchern 8 verbrauchten Leistung entspricht, steht das Hausnetz 2 mit dem öffentlichen Stromnetz 3 in Verbindung. Dabei kann sowohl Strom aus dem öffentlichen Stromnetz 3 bezogen als auch umgekehrt in das öffentliche Netz 3 eingespeist werden.

Das erfindungsgemäße System dient dazu, die von dem hauseigenen Energieerzeuger zur Verfügung gestellte elektrische Leistung, welche nicht von den hauseigenen Verbrauchern 8 benötigt wird, möglichst weitgehend in Wärme umzuwandeln und zur Beladung eines Warmwasserspeichers, beispielsweise des Warmwasserspeichers einer Brauchwassereinheit oder einer Heizungsanlage, zu nutzen.

Hierfür ist eine Elektroheizeinheit 10 vorgesehen, welche einen Hydraulikkreislauf aufweist, der an einen Ablauf 13 und einen Zulauf 12 des nicht dargestellten Wärmespeichers anschließbar ist. In dem Hydraulikkreislauf ist ein elektrischer Durchlauferhitzer 14 vorgesehen, welcher die ihm zugeführte elektrische Energie in Wärme umwandelt und an das durch den Durchlauferhitzer hindurchfließende Wasser abgibt. Weiterhin ist dem Durchlauferhitzer 14 eine Umwälzpumpe 15 vorgeschaltet, welche das kalte Wasser aus dem Speicher abzieht und dem Durchlauferhitzer zuführt. Weiterhin sind Kugelhähne 16 und 17 vorgesehen, über welche der Hydraulikkreislauf der Elektroheizeinheit abgeriegelt werden kann, wobei der obere Kugelhahn 17 mit einer Schwerkraftbremse ausgestaltet ist.

Das System umfasst dabei einen Systemregler 18 mit einer Heiz-Steuerfunktion zur Ansteuerung der dem elektrischen Durchlauferhitzer 14 zugeführten elektrischen Leistung und einer Pumpen-Steuerfunktion zur Ansteuerung der Umwälzpumpe 15.

Der Systemregler 18 steht hierfür zum einen mit einem Leistungssensor 5 in Verbindung, welcher zumindest die von dem Hausnetz 2 in das öffentliche Stromnetz eingespeiste Leistung misst. Bevorzugt handelt es sich dabei um einen Zwei-Wege-Leistungssensor, d. h. der Leistungssensor kann sowohl bestimmen, ob Leistung eingespeist oder bezogen wird, als auch die Höhe der Leistung in beide Richtungen. Entscheidend ist jedoch, dass der Leistungssensor 4 die Höhe der von dem Hausnetz 2 in das öffentliche Stromnetz 3 abgegebenen Leistung messen kann. Der Leistungssensor 5 ist hierfür zwischen dem Hausnetz 2 und dem öffentlichen Stromnetz 3 angeordnet.

Weiterhin ist in Fig. 1 ein Stromzähler 4 dargestellt, welcher die bezogene bzw. eingespeiste Energie bestimmt. Dieser ist vornehmlich für Abrechnungszwecke vorgesehen, und für die Umsetzung des erfindungsgemäßen Systems nicht zwingend notwendig.

Die Heiz-Steuerfunktion des Systemreglers 18 steht mit dem Leistungssensor 5 in Verbindung, und erhält von diesem entsprechende Messdaten. Die Ansteuerung des elektrischen Durchlauferhitzers 14 erfolgt dabei anhand der Messwerte des Leistungssensors 5. Hierfür ist im Ausführungsbeispiel eine Leistungsmodulation 9 vorgesehen, wobei die Heiz-Steuerungsfunktion die dem elektrischen Durchlauferhitzer 14 zugeführte elektrische Leistung so ansteuert, dass möglichst viel von der von dem hauseigenen Energieerzeuger 1 erzeugten, im Hausnetz jedoch nicht anderweitig verwendeten Leistung in thermische Energie umgewandelt und eingelagert wird. Umgekehrt soll verhindert werden, dass Strom aus dem öffentlichen Stromnetz 3 zur thermischen Energiespeicherung bezogen wird.

Der hauseigene Energieerzeuger 1, bei welchem es sich im Ausführungsbeispiel um eine Photovoltaikanlage handelt, erzeugt dabei aufgrund externer Einflüsse und bei einer Photovoltaikanlage insbesondere der aktuellen Sonneneinstrahlung eine bestimmte Leistung. Ein Teil der so erzeugten Leistung wird dabei üblicherweise im Hausnetz über die an das Hausnetz angeschlossenen Verbraucher 8 verbraucht. Mit dem Leistungssensor 5 wird nun gemessen, ob es einen Überschuss in der Stromproduktion gibt, welcher ins öffentliche Netz eingespeist wird.

Die Heiz-Steuerfunktion steuert daher dann, wenn ein Überschuss an erzeugtem Strom gemessen wird, die Leistungsmodulation 9 entsprechend an, so dass dieser Überschuss durch den elektrischen Durchlauferhitzers 14 verbraucht wird. Hierfür ist eine Regelung vorgesehen, deren Ziel es ist, zum einen die Einspeiseleistung auf Null herunter zu regeln, und zum anderen die Elektroheizung ausschließlich mit überschüssigem Strom des hauseigenen Stromerzeugers 1 zu versorgen. Die Soll-Regelgröße für die Heiz-Steuerfunktion ist daher ein Zu- und Abfluss zum öffentlichen Stromnetz von Null. Die der Elektroheizeinheit zugeführte Leistung wird also heruntergeregelt, wenn ansonsten Strom aus dem Stromnetz bezogen würde. Dagegen wird die Leistung hochgeregelt, wenn ansonsten Strom ins Stromnetz abfließen würde.

Die Ansteuerung der elektrischen Leistung über die Heiz-Steuerfunktion kann dabei je nach Variante stufig oder stufenlos erfolgen. Bevorzugt ist die Leistungsmodulation jedoch als stufenlose Leistungsmodulation der ohmschen Last ausgestaltet. Gegebenenfalls kann jedoch, wenn der Durchlauferhitzer 14 mehrere separate Heizelemente aufweist, alternativ oder zusätzlich eine Leistungsansteuerung über das Zu- und Abschalten einzelner Heizelemente erfolgen.

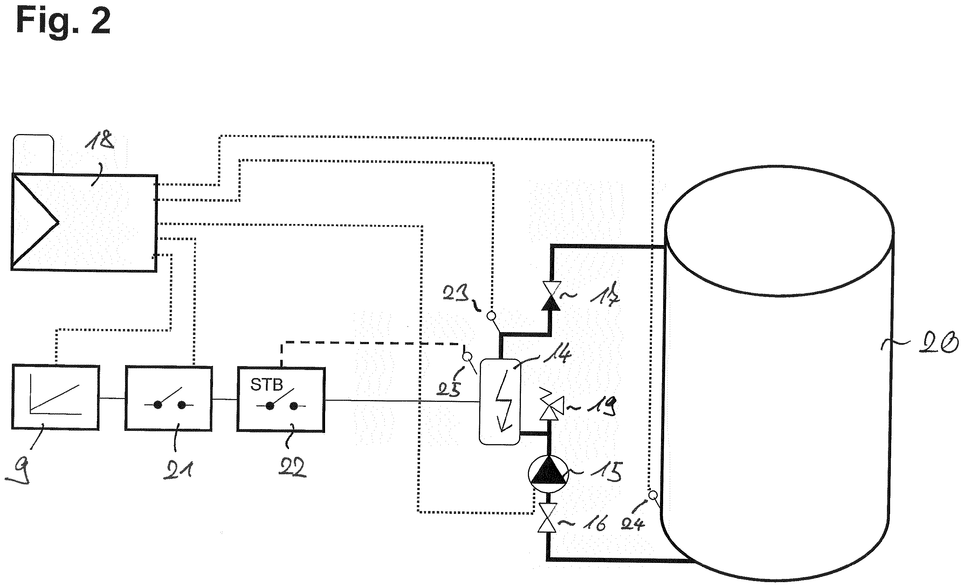

Das thermische Speicherlademanagement, welches über die Pumpen-Steuerfunktion der Steuerung durchgeführt wird, wird nun anhand von Fig. 2 beschrieben, in welcher auch die hierfür erfindungsgemäß eingesetzten Temperaturfühler näher dargestellt sind.

Insbesondere umfasst die Elektroheizeinheit dabei einen Zieltemperatursensor 23, welcher im Ausführungsbeispiel oberhalb des elektrischen Durchlauferhitzers 14 angeordnet ist und daher die Temperatur des den Durchlauferhitzer 14 verlassenden Wassers misst.

Aufgrund der Heiz-Steuerfunktion erhält der elektrische Durchlauferhitzer 14 dabei üblicherweise eine schwankende Leistung. Die aufgrund der Beheizung des Durchlauferhitzers 14 resultierende Temperatur wird über den Zieltemperatursensor 23 gemessen. Die Pumpen-Steuerfunktion, welche in Fig. 2 Teil des Systemreglers 18 ist, regelt die Drehzahl der Umwälzpumpe 15 dabei so, dass sich eine konstante Zieltemperatur von z. B. 70° C ergibt. Die Zieltemperatur als Soll-Größe der Regelung ist dabei in der Steuerung hinterlegt und kann gegebenenfalls einstellbar sein.

Der Warmwasserspeicher wird hierdurch geschichtet von oben nach unten beladen. Schwankt die zur Verfügung stehende Leistung für die Elektroheizeinheit, so wird die Drehzahl der Umwälzpumpe 15 nachgeregelt, um die Beladetemperatur konstant zu halten.

Weiterhin ist ein Speichertemperatursensor 24 vorgesehen, welcher die Temperatur am Ausgang des Warmwasserspeichers 20 bestimmt. Die Heiz-Steuerfunktion vergleicht dabei die von dem Zieltemperatursensor 23 gemessene Temperatur mit der von dem Speichertemperatursensor 24 gemessenen Temperatur. Wenn die von dem Zieltemperatursensor 23 gemessene Temperatur eine Minimaltemperatur übersteigt und höher ist als die Temperatur, welche von dem Speichertemperatursensor 24 gemessen wird, so wird die oben beschriebene Drehzahlregelung der Umwälzpumpe 15 gestartet. Die Ansteuerung der Pumpe bleibt dabei so lange bestehen, wie eine positive Temperaturdifferenz zwischen der durch den Zieltemperatursensor 23 gemessenen Temperatur und der durch den Speichertemperatursensor 24 gemessenen Temperatur besteht und/oder größer ist als die Minimaltemperatur.

Hierdurch arbeitet die Pumpen-Steuerungsfunktion im Falle eines Abschaltens des elektrischen Durchlauferhitzers wie ein Pumpennachlauf, und sorgt dafür, dass die Restwärme aus dem Durchlauferhitzer in den Warmwasserspeicher 20 gefördert wird.

Die Heiz-Steuerfunktion weist dabei eine Temperatur-Abschaltungsfunktion auf, welche die Stromzufuhr zum Durchlauferhitzer unterbricht, wenn die von dem Speichertemperatursensor 24 gemessene Temperatur eine maximal zulässige Speichertemperatur überschreitet, und / oder wenn die von dem Zieltemperatursensor 23 gemessene Temperatur eine maximal zulässige Temperaturschwelle überschreitet. Hierdurch wird eine thermische Überlastung der Hydrauliksystems verhindert. Dafür ist im Ausführungsbeispiel ein Schaltschutz 21 vorgesehen, welcher von der in den Systemregler 18 integrierten Temperatur-Abschaltungsfunktion angesteuert wird. Die Stromzufuhr zur Umlaufpumpe 15 und zum Systemregler 18 wird jedoch nicht unterbrochen, sodass die oben näher beschriebene Nachlauffunktion erreicht wird, bis die durch den Zieltemperatursensor gemessene Temperatur der durch den Speichertemperatursensor 24 gemessene Temperatur und / oder der Minimaltemperatur entspricht. Alternativ kann die im Ausführungsbeispiel über den Schaltschütz 21 erfolgende Temperatur-Abschaltung auch durch eine entsprechende Ansteuerung der Leistungsmodulation 9 erfolgen. Weiterhin können Schaltschütz 21 und Leistungsmodulation 9 auch ein Bauteil sein.

Die Drehzahlregelung der Umwälzpumpe 15 regelt die Drehzahl der Pumpe dabei innerhalb eines vorgegebenen Drehzahlbereiches, d. h. zwischen einer vorgegebenen minimalen Drehzahl und einer vorgegebenen maximalen Drehzahl der Umwälzpumpe 15. Bei keiner oder nur minimaler Leistung, welche dem Durchlauferhitzer zugeführt wird, regelt die Hydrauliksteuerung die Drehzahl zunächst auf die Minimaldrehzahl herunter. Kann jedoch auch bei dieser Minimaldrehzahl die gewünschte Zieltemperatur und / oder die notwendige Minimaltemperatur nicht gehalten werden, schaltet die Hydrauliksteuerung die Pumpe und damit die Drehzahlregelung ab. Sind die Einschaltbedingungen der notwendigen Minimaltemperatur und der höheren Temperatur im Vergleich zum Speicher wieder erreicht, schaltet die Pumpe wieder mit Minimaldrehzahl ein. Durch dieses Taktverhalten der PumpenSteuerung wird die Beladetemperatur auch bei minimaler Leistung konstant gehalten.

Als Sicherheitseinrichtungen sind bei dem in Fig. 2 gezeigten System zum einen eine Schwerkraftbremse im Kugelhahn 17 vorgesehen, welche zur Unterbindung von thermischen Zirkulationen durch den Hydraulikkreislauf der erfindungsgemäßen Elektroheizeinheit eingesetzt wird, und damit ein ungewolltes Auskühlen des Speichers verhindert. Weiterhin ist ein Sicherheitsventil 19 vorgesehen, welches eine Volumenausdehnung des im Hydraulikkreislauf befindlichen Wassers ableitet, wenn versehentlich bei abgesperrten Kugelhähnen der Durchlauferhitzer beheizt wird. Weiterhin ist ein Sicherheitstemperaturbegrenzer 22 vorgesehen, welcher mit einem Sicherheitstemperatursensor 25 in Verbindung steht und die Stromzufuhr zum Durchlauferhitzer beim Überschreiten einer Grenztemperatur von beispielsweise 95° C unterbricht. Auch in diesem Fall wird die Stromzufuhr zur Umwälzpumpe 15 und zum Systemregler 18 nicht unterbrochen, so dass auch hier eine Nachlauffunktion zum Ableiten der Wärme aus dem Durchlauferhitzer 14 in den Warmwasserspeicher 20 besteht.

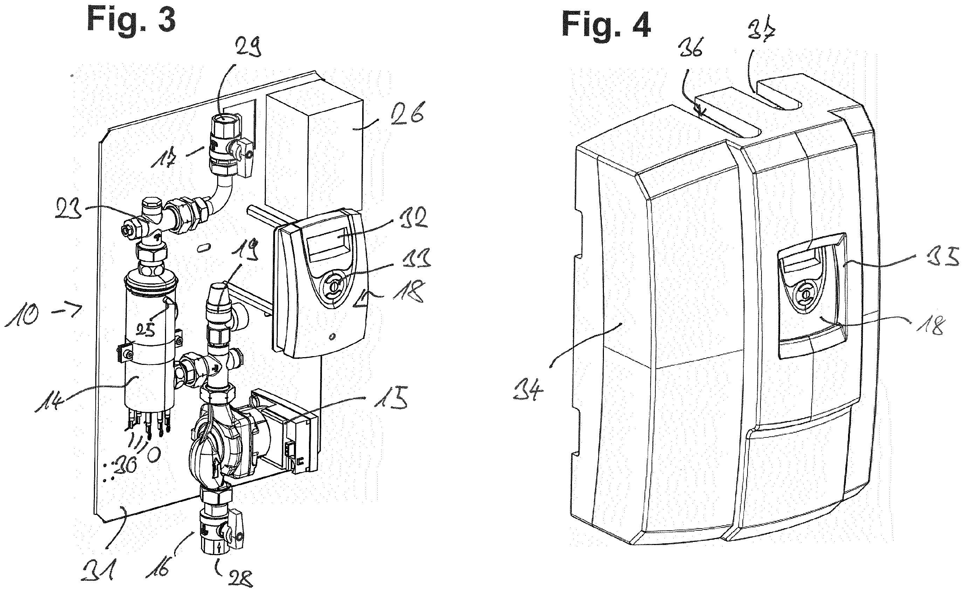

In Fig. 3 ist nun ein konkretes Ausführungsbeispiel eines erfindungsgemäßen Systems in einer perspektivischen Darstellung gezeigt.

Der Hydraulikkreislauf weist dabei Anschlüsse 28 und 29 auf, über welche er mit einem Warmwasserspeicher verbindbar ist. Weiterhin sind Kugelhähne 16 und 17 vorgesehen, durch welche der Hydraulikkreislauf auch im eingebauten Zustand von dem Warmwasserspeicher isoliert werden kann, beispielsweise um Bestandteile des Hydraulikkreislaufes auszutauschen. Der obere Kugelhahn 17 weist eine Schwerkraftbremse auf.

Im Hydraulikkreislauf sind die Umwälzpumpe 15, das Sicherheitsventil 19, der Durchlauferhitzer 14 sowie der Zieltemperatursensor 23 angeordnet.

Der Durchlauferhitzer 14 weist dabei einen Hydraulik-Druckbehälter auf, in oder an welchem eines oder mehrere elektrische Heizelemente vorgesehen sind, über welche das durch den Druckbehälter fließende Wasser erwärmt werden kann. Im Ausführungsbeispiel sind die Heizelemente dabei im Inneren des Druckbehälters 14 vorgesehen und werden von dem durch diesen hindurchfließenden Wasser umspült. Weiterhin ist im oder am Druckbehälter oder an den Heizelementen ein Sicherheitstemperaturfühler 25, dessen Anschluss in Fig. 3 zu sehen ist, vorgesehen. Die Heizelemente des Durchlauferhitzers können dabei über die Anschlüsse 30 mit der Leistungsmodulation 9 sowie dem Schaltschütz 21 und dem STB 22 verbunden werden.

Der Zieltemperaturfühler 23 ist oberhalb des Durchlauferhitzers 14 im oder am Hydraulikkreislauf angeordnet, sodass auch dann, wenn die Umlaufpumpe 15 nicht arbeitet, bei einer Erwärmung des Wassers im Durchlauferhitzer 14 durch die natürliche Konvektion ein Temperaturanstieg am Zieltemperatursensor 23 erfasst wird.

Weiterhin ist der Systemregler 18 dargestellt, welcher die Heiz-Steuerfunktion und die Pumpen-Steuerfunktion implementiert. Der Systemregler 18 weist dabei ein Display 32 sowie Bedienelemente 33 auf. Separat zum Systemregler 18 ist als eigenes Bauelement ein Leistungsteil 26 vorgesehen, welches die Leistungsmodulation 9 für die dem Durchlauferhitzer 14 zugeführte Leistung und insbesondere die Leistungselektronik, bevorzugt in Form einer Phasenanschnittsteuerung, umfasst. Bevorzugt umfasst das Leistungsteil 26 auch die Schaltschütze.

Die einzelnen in Fig. 3 dargestellten Komponenten des erfindungsgemäßen Systems sind dabei auf einer gemeinsamen Montageplatte 31 montiert.

In Fig. 4 ist das erfindungsgemäße System mit einer Abdeckung 34 für die in Fig. 3 gezeigte Baueinheit dargestellt. Die Abdeckung 34 dient dabei insbesondere als thermische Dämmung für den Hydraulikkreislauf und den elektrischen Durchlauferhitzer 14. Die Abdeckung 34 ist daher bevorzugt aus einem thermisch dämmenden Material gefertigt, insbesondere aus EPP.

Die Abdeckung weist eine Aussparung 35 auf, durch welche der Systemregler 18 zugänglich ist. Weiterhin sind seitliche Aussparungen 36 und 37 für die Durchführung der Hydraulikanschlüsse sowie die Durchführung der Elektroinstallation vorgesehen.

Die in Fig. 3 und 4 gezeigte Baugruppe wird dabei hydraulisch mit einem üblicherweise bereits vorhandenen Warmwasserspeicher verbunden. Elektrisch wird die Baugruppe zum einen mit dem Hausnetz verbunden, und zum anderen mit dem zwischen Hausnetz und öffentlichem Netz angeordneten Leistungssensor. Weiterhin wird eine Verbindung mit dem Speichertemperaturfühler hergestellt.

Die vorliegende Erfindung ist daher problemlos in bestehende Hausinstallationen wie beispielsweise eine Brauchwasser- oder Heizungsanlage hydraulisch integrierbar und erlaubt ein einfaches und effektives Energie- und Speichermanagement.

## Patentansprüche

1. System zur Nutzung der von einem hauseigenen Energieerzeuger (1) zur Verfügung gestellten elektrischen Leistung zur Beladung eines Warmwasserspeichers (20), umfassend:
einen Warmwasserspeicher mit einem Speicher-Temperatursensor,
eine Elektroheizeinheit (10) mit einem an den Warmwasserspeicher anschließbaren Hydraulikkreislauf, in welchem eine Umwälzpumpe (15), ein elektrischer Durchlauferhitzer (14) und ein Ziel-Temperatursensor (23) angeordnet sind, und
eine Steuerung (18), welche mit einem Leistungssensor (5) verbindbar ist, welcher zwischen einem Hausnetz (2), an welchem der hauseigene Energieerzeuger und ein oder mehrere hauseigene Verbraucher (8) angeschlossen sind, und einem öffentlichen Stromnetz (3) angeordnet ist, und welcher zumindest die vom Hausnetz in das öffentliche Stromnetz abgegebene Leistung misst,
wobei die Steuerung (18) eine Heiz-Steuerfunktion zur Ansteuerung der dem elektrischen Durchlauferhitzer (14) zugeführten elektrischen Leistung anhand der Messwerte des Leistungssensors (5) und
eine Pumpen-Steuerfunktion zur Ansteuerung der Umwälzpumpe (15) anhand der Messwerte des Ziel-Temperatursensors (23) umfasst,
wobei die Steuerung mit dem Speicher-Temperatursensor (24) verbunden ist, **dadurch gekennzeichnet, dass** die Pumpen-Steuerfunktion die Ansteuerung der Umwälzpumpe (15) anhand der Messwerte des Ziel-Temperatursensors (23) und der Messwerte des Speicher-Temperatursensors (24) vornimmt.

2. System nach Anspruch 1, wobei die Heiz-Steuerfunktion anhand der Messwerte des Leistungssensors (5) die Leistung des elektrischen Durchlauferhitzers (10) so ansteuert, dass sie im wesentlichen der von dem hauseigenen Energieerzeuger (1) zur Verfügung gestellten, von den Verbrauchern (8) im Hausnetz nicht genutzten elektrischen Leistung entspricht, oder wobei die Heiz-Steuerfunktion eine Heiz-Regelungsfunktion umfasst, welche durch Ansteuerung der dem elektrischen Durchlauferhitzer (10) zugeführten elektrischen Leistung die vom Hausnetz (2) an das öffentliche Netz (3) abgegebene Leistung auf einen Zielwert von Null regelt und/oder die dem elektrischen Durchlauferhitzer (10) zugeführte elektrische Leistung auf Null setzt, wenn die von den Verbrauchern (8) verbrauchte Leistung die von dem hauseigenen Energieerzeuger (1) zur Verfügung gestellte Leistung übersteigt.

3. System nach Anspruch 1 oder 2, wobei die Pumpen-Steuerfunktion eine Drehzahl-Regelungsfunktion umfasst, welche die Drehzahl der Umwälzpumpe (15) anhand der Messwerte des Ziel-Temperatursensors (23) so ansteuert, dass die von dem Ziel-Temperatursensor (23) gemessene Temperatur einer vorgegebenen Zieltemperatur entspricht, wobei die Zieltemperatur bevorzugt einstellbar ist, und/oder wobei das System einen konventionellen Wärmeerzeuger umfasst und die Zieltemperatur oberhalb der Solltemperatur des konventionellen Wärmeerzeugers liegt, um direkt nutzbare Wärme zu erzeugen und konventionelle Energie einzusparen.

4. System zur Nutzung der von einem hauseigenen Energieerzeuger (1) zur Verfügung gestellten elektrischen Leistung zur Beladung eines Warmwasserspeichers (20), umfassend:
einen Warmwasserspeicher mit einem Speicher-Temperatursensor,
eine Elektroheizeinheit (10) mit einem an den Warmwasserspeicher anschließbaren Hydraulikkreislauf, in welchem eine Umwälzpumpe (15), ein elektrischer Durchlauferhitzer (14) und ein Ziel-Temperatursensor (23) angeordnet sind, und
eine Steuerung mit einer Pumpen-Steuerfunktion zur Ansteuerung der Umwälzpumpe (15) anhand der Messwerte des Ziel-Temperatursensors (23), welche eine Drehzahl-Regelungsfunktion umfasst, die die Drehzahl der Umwälzpumpe anhand der Messwerte des Ziel-Temperatursensors so ansteuert, dass die von dem Ziel-Temperatursensor gemessene Temperatur einer vorgegebenen Zieltemperatur entspricht, wobei die Steuerung mit dem Speicher-Temperatursensor (24) verbunden ist und **dadurch gekennzeichnet, dass** die Pumpen-Steuerfunktion die Ansteuerung der Umwälzpumpe (15) anhand der Messwerte des Ziel-Temperatursensors (23) und der Messwerte des Speicher-Temperatursensors (24) vornimmt.

5. System nach Anspruch 3 oder 4, wobei die Drehzahl-Regelungsfunktion die Drehzahl der Umwälzpumpe (15) anhand der Messwerte des Ziel-Temperatursensors (23) innerhalb eines vorgegebenen Drehzahl-Bereichs einstellt, wobei insbesondere eine Minimal-Drehzahl und/oder MaximalDrehzahl vorgegeben ist.

6. System zur Nutzung der von einem hauseigenen Energieerzeuger (1) zur Verfügung gestellten elektrischen Leistung zur Beladung eines Warmwasserspeichers (20), umfassend:
eine Elektroheizeinheit (10) mit einem an einen Warmwasserspeicher anschließbaren Hydraulikkreislauf, in welchem eine Umwälzpumpe (15), ein elektrischer Durchlauferhitzer (14) und ein Ziel-Temperatursensor (23) angeordnet sind, und
eine Steuerung, welche mit einem Leistungssensor (5) verbindbar ist, welcher zwischen einem Hausnetz (2), an welchem der hauseigene Energieerzeuger und ein oder mehrere hauseigene Verbraucher (8) angeschlossen sind, und einem öffentlichen Stromnetz (3) angeordnet ist, und welcher zumindest die vom Hausnetz in das öffentliche Stromnetz abgegebene Leistung misst,
wobei die Steuerung (18) eine Heiz-Steuerfunktion zur Ansteuerung der dem elektrischen Durchlauferhitzer (14) zugeführten elektrischen Leistung anhand der Messwerte des Leistungssensors (5) und
eine Pumpen-Steuerfunktion zur Ansteuerung der Umwälzpumpe (15) anhand der Messwerte des Ziel-Temperatursensors (23) umfasst,
wobei die Steuerung mit einem Speicher-Temperatursensor (24) verbindbar ist, **dadurch gekennzeichnet, dass** die Pumpen-Steuerfunktion die Ansteuerung der Umwälzpumpe (15) anhand der Messwerte des Ziel-Temperatursensors (23) und der Messwerte des Speicher-Temperatursensors (24) vornimmt wobei die Pumpen-Steuerfunktion die Ansteuerung der Umwälzpumpe (15) insbesondere die Drehzahl-Regelungsfunktion aktiviert, wenn die von dem Ziel-Temperatursensor gemessene Temperatur eine vorgegebene Einschaltbedingung relativ zur von dem Speicher-Temperatursensor gemessenen Temperatur erfüllt und/oder dass die Pumpen-Steuerfunktion die Ansteuerung der Umwälzpumpe (15), insbesondere die Drehzahl-Regelungsfunktion, deaktiviert, wenn die von dem Ziel-Temperatursensor gemessene Temperatur eine vorgegebene Ausschaltbedingung relativ zur von dem Speicher-Temperatursensor gemessenen Temperatur erfüllt.

7. System zur Nutzung der von einem hauseigenen Energieerzeuger (1) zur Verfügung gestellten elektrischen Leistung zur Beladung eines Warmwasserspeichers (20), umfassend:
eine Elektroheizeinheit (10) mit einem an einen Warmwasserspeicher anschließbaren Hydraulikkreislauf, in welchem eine Umwälzpumpe (15), ein elektrischer Durchlauferhitzer (14) und ein Ziel-Temperatursensor (23) angeordnet sind, und
eine Steuerung mit einer Pumpen-Steuerfunktion zur Ansteuerung der Umwälzpumpe (15) anhand der Messwerte des Ziel-Temperatursensors (23), welche eine Drehzahl-Regelungsfunktion umfasst, die die Drehzahl der Umwälzpumpe anhand der Messwerte des Ziel-Temperatursensors so ansteuert, dass die von dem Ziel-Temperatursensor gemessene Temperatur einer vorgegebenen Zieltemperatur entspricht, wobei die Steuerung mit einem Speicher Temperatursensor (24) verbindbar ist, **dadurch gekennzeichnet, dass** die Pumpen-Steuerfunktion die Ansteuerung der Umwälzpumpe (15) anhand der der Messwerte des Ziel-Temperatursensors (23) und der Messwerte des Speicher-Temperatursensors (24) vornimmt, wobei die Pumpen-Steuerfunktion die Ansteuerung der Umwälzpumpe (15) und insbesondere die Drehzahl-Regelungsfunktion aktiviert, wenn die von dem Ziel-Temperatursensor gemessene Temperatur eine vorgegebene Einschaltbedingung relativ zur von dem Speicher-Temperatursensor gemessenen Temperatur erfüllt und/oder wobei die Pumpen-Steuerfunktion die Ansteuerung der Umwälzpumpe (15), insbesondere die Drehzahl-Regelungsfunktion, deaktiviert, wenn die von dem Ziel-Temperatursensor gemessene Temperatur eine vorgegebene Ausschaltbedingung relativ zur von dem Speicher-Temperatursensor gemessenen Ternperatur erfüllt.

8. System nach einem der vorangegangenen Ansprüche, wobei die Pumpen-Steuerfunktion die Ansteuerung der Umwälzpumpe (15) und insbesondere die Drehzahl-Regelungsfunktion aktiviert, wenn die von dem Ziel-Temperatursensor (23) gemessene Temperatur größer ist als die von dem Speicher-Temperatursensor (24) gemessene Temperatur und/oder eine Minimaltemperatur, und/oder wobei die Pumpen-Steuerfunktion die Ansteuerung der Umwälzpumpe (15), insbesondere die Drehzahl-Regelungsfunktion, deaktiviert, wenn die von dem Ziel-Temperatursensor gemessene Temperatur kleiner ist als die von dem Speicher-Temperatursensor (24) gemessene Temperatur und/oder eine Minimaltemperatur.

9. System nach einem der vorangegangenen Ansprüche, mit einer Temperatur-Abschaltungsfunktion, welche die Stromzufuhr zum elektrischen Durchlauferhitzer (10) unterbricht, wenn die von einem Temperatursensor gemessene Temperatur eine Abschalt-Temperatur überschreitet, wobei es sich bei dem Temperatursensor bevorzugt um den Zieltemperatursensor (23) und/oder einen Speicher-Temperatursensor (24) handelt, wobei bevorzugt einen Schaltschütz (21) vorgesehen ist, welcher von der Temperatur-Abschaltungsfunktion angesteuert wird, welcher weiter bevorzugt in der Verbindungsleitung zwischen dem Hausnetz (2) und dem elektrischen Durchlauferhitzer (10) angeordnet ist, und/oder die Temperatur-Abschaltfunktion über die Ansteuerung eines Leistungsteils (26) durch die Heiz-Steuerungsfunktion implementiert wird, und/oder wobei die Temperatur-Abschaltungsfunktion bevorzugt die Stromzufuhr zur Umwälzpumpe (15) und zur Steuerung (18) nicht abschaltet und/oder die Ansteuerung der Umwälzpumpe (15) durch die Pumpen-Steuerfunktion nicht abschaltet und/oder beeinflusst.

10. System nach einem der vorangegangenen Ansprüche, wobei das System einen Leistungssensor (6) zur Messung der von dem hauseigenen Energieerzeuger (1) erzeugten Leistung umfasst und/oder die Steuerung mit einem solchen verbindbar ist, und/oder wobei das System eine Anzeigeeinheit zur Anzeige und/oder Visualisierung der von dem hauseigenen Energieerzeuger erzeugten und/oder von den Verbrauchern verbrauchten und/oder der dem elektrischen Durchlauferhitzer zugeführten elektrischen Leistung umfasst.

11. System nach einem der vorangegangenen Ansprüche, mit einer Abdeckung 34) für das Hydrauliksystem und/oder die Steuerung (18) und/oder das Leistungsteil (26), wobei es sich bevorzugt um eine gemeinsame Abdeckung handelt und/oder es sich bevorzugt um eine Dämmungs-Abdeckung handelt und/oder wobei die Abdeckung bevorzugt die Steuerung thermisch gegenüber dem elektrischen Durchlauferhitzer und/oder dem Leistungsteil dämmt.

12. System nach einem der vorangegangenen Ansprüche, welches weiterhin den Leistungssensor (5) umfasst, welcher zwischen dem Hausnetz und dem öffentlichen Stromnetz anordenbar ist.

13. Steuerung (18) für ein System nach einem der vorangegangenen Ansprüche mit einer Pumpen-Steuerfunktion zur Ansteuerung der Umwälzpumpe (15) anhand der Messwerte des Ziel-Temperatursensors (23),
wobei die Steuerung eine Heiz-Steuerfunktion zur Ansteuerunq der dem elektrischen Durchlauferhitzer (14) zugeführten elektrischen Leistung anhand der Messwerte des Leistungssensors (5) umfasst und/oder die Pumpen-Steuerfunktion eine Drehzahl-Regelungsfunktion umfasst, die die Drehzahl der Umwälzpumpe anhand der Messwerte des Ziel-Temperatursensors so ansteuert, dass die von dem Ziel-Temperatursensor gemessene Temperatur einer vorgegebenen Zieltemperatur entspricht,
wobei die Steuerung mit einem Speicher-Temperatursensor (24) verbindbar ist und die Pumpen-Steuerfunktion die Ansteuerung der Umwälzpumpe (15) anhand der Messwerte des Ziel-Temperatursensors (23) und der Messwerte des Speicher-Temperatursensors (24) vornimmt,
**dadurch gekennzeichnet,**
**dass** die Pumpen-Steuerfunktion die Ansteuerung der Umwälzpumpe (15) insbesondere eine Drehzahl-Regelungsfunktion aktiviert, wenn die von dem Ziel-Temperatursensor gemessene Temperatur eine vorgegebene Einschaltbedingung relativ zur von dem Speicher-Temperatursensor gemessenen Temperatur erfüllt und/oder dass die Pumpen-Steuerfunktion die Ansteuerung der Umwälzpumpe (15), insbesondere eine Drehzahl-Regelungsfunktion, deaktiviert, wenn die von dem Ziel-Temperatursensor gemessene Temperatur eine vorgegebene Ausschaltbedingung relativ zur von dem Speicher-Temperatursensor gemessenen Temperatur erfüllt.

14. Steuerung (18) nach Anspruch 13 mit einem Leistungsteil (26), welches bevorzugt als separate Baueinheit ausgeführt ist.

15. Hausinstallation mit einem erfindungsgemäßen System nach einem der vorangegangenen Ansprüche, welches bevorzugt weiterhin einen zwischen dem Hausnetz und dem öffentlichen Stromnetz angeschlossenen Leistungssensor (5) und/oder einen Warmwasserspeicher (20) und/oder einen hauseigenen Energieerzeuger (1) umfasst.

## Claims

1. System for the usage of the electrical power made available by an in-house energy generator (1) for loading a warm water store (20), including:
a warm water store with a store temperature sensor,
an electric heating unit (10) with a hydraulic circuit connectable to the warm water store, in which hydraulic circuit a circulating pump (15), an electric continuous-flow heater (14) and a target temperature sensor (23) are arranged, and
a controller (18), which can be connected with a power sensor (5), which power sensor is arranged between a home network (2), to which the in-house energy generator and one or multiple in-house consumers (8) are connected, and a public power grid (3), and which in-house energy generator measures at least the power output by the home network into the public power grid,
wherein the controller (18) includes a heating control function for actuating the electrical power supplied to the electric continuous-flow heater (14), based on the measurement values of the power sensor (5) and
includes a pump control function for actuating the circulating pump (15) based on the measurement values of the target temperature sensor (23),
wherein the controller is connected with the store temperature sensor (24),
**characterized in that** the pump control function effects the actuation of the circulating pump (15) based on the measurement values of the target temperature sensor (23) and the measurement values of the store temperature sensor (24).

2. System according to claim 1, wherein the heating control function, based on the measurement values of the power sensor (5), actuates the power of the electric continuous-flow heater (10) such that it substantially corresponds to the electrical power not used by the consumers (8) in the home network, made available by the in-house energy generator (1), or wherein the heating control function includes a heating regulating function, which, through actuation of the electrical power supplied to the electric continuous-flow heater (10), regulates the power output by the home network (2) to the public network (3) to a target value of zero, and/or sets the electrical power supplied to the electric continuous-flow heater (10) to zero if the power consumed by the consumers (8) exceeds the power made available by the in-house energy generator (1).

3. System according to claim 1 or 2, wherein the pump control function includes a rotational speed regulating function, which actuates the rotational speed of the circulating pump (15), based on the measurement values of the target temperature sensor (23), such that the temperature measured by the target temperature sensor (23) corresponds to a predefined target temperature, wherein the target temperature is preferably adjustable, and/or wherein the system includes a conventional heat generator and the target temperature lies above the desired temperature of the conventional heat generator, in order to generate directly-usable heat, and to save conventional energy.

4. System for usage of the electrical power made available by an in-house energy generator (1) for loading a warm water store (20), including:
a warm water store with a store temperature sensor,
an electric heating unit (10) with a hydraulic circuit connectable to the warm water store, in which hydraulic circuit a circulating pump (15), an electric continuous-flow heater (14) and a target temperature sensor (23) are arranged, and
a controller with a pump control function for actuation of the circulating pump (15), based on the measurement values of the target temperature sensor (23), which includes a rotational speed-regulating function, which actuates the rotational speed of the circulating pump, based on the measurement values of the target temperature sensor, such that the temperature measured by the target temperature sensor corresponds to a predefined target temperature, wherein the controller is connected with the store temperature sensor (24), and **characterized in that** the pump control function undertakes the actuation of the circulating pump (15), based on the measurement values of the target temperature sensor (23) and the measurement values of the store temperature sensor (24).

5. System according to claim 3 or claim 4, wherein the rotation speed regulating function sets the speed of the circulating pump (15), based on the measurement values of the target temperature sensor (23), within a predetermined rotational speed range, wherein in particular a minimum rotational speed and/or maximum rotational speed are predetermined.

6. System for usage of the electrical power made available by an in-house energy generator (1) for loading a warm water store (20), including:
an electric heating unit (10) with a hydraulic circuit connectable to a warm water store, in which hydraulic circuit a circulating pump (15), an electric continuous-flow heater (14), and a target temperature sensor (23) are arranged, and
a controller, which can be connected with a power sensor (5), which is arranged between a home network (2), to which the in-house energy generator and one or multiple in-house consumers (8) are connected, and a public power grid (3), and which power sensor measures at least the power output by the home network into the public power grid,
wherein the controller (18) includes a heating control function for actuating the electrical power supplied to the electric continuous-flow heater (14), based on the measurement values of the power sensor (5), and
a pump control function for the actuation of the circulating pump (15) based on the measurement values of the target temperature sensor (23),
wherein the controller is connectable with a store temperature sensor (24),
**characterized in that** the pump control function undertakes the actuation of the circulating pump (15) based on the measurement values of the target temperature sensor (23) and the measurement values of the store temperature sensor (24)
wherein
the pump control function activates the actuation of the circulating pump (15), in particular the rotational speed regulating function, if the temperature measured by the target temperature sensor fulfills a pre-defined switching-on condition, relative to the temperature measured by the store temperature sensor
and/or **in that** the pump control function deactivates the actuation of the circulating pump (15), in particular the rotational speed regulating function, if the temperature measured by the target temperature sensor fulfills a pre-defined switching-off condition relative to the temperature measured by the store temperature sensor.

7. System for usage of the electrical power made available by an in-house energy generator (1) for loading a warm water store (20), including:
an electric heating unit (10) with a hydraulic circuit connectable to a warm water store, in which hydraulic circuit a circulating pump (15), an electric continuous-flow heater (14) and a target temperature sensor (23) are arranged, and
a controller with a pump control function for the actuation of the circulating pump (15), based on the measurement values of the target temperature sensor (23), which includes a rotational speed regulating function, which actuates the rotational speed of the circulating pump, based on the measurement values of the target temperature sensor, such that the temperature measured by the target temperature sensor corresponds to a pre-defined target temperature, wherein the controller is connectable with a store temperature sensor (24), **characterized in that** the pump control function undertakes the actuation of the circulating pump (15) based on the measurement values of the target temperature sensor (23) and the measurement values of the store temperature sensor (24), wherein the pump control function activates the actuation of the circulating pump (15), and in particular the rotational speed regulating function, if the temperature measured by the target temperature sensor fulfills a pre-defined switch-on condition relative to the temperature measured by the store temperature sensor, and/or
wherein the pump control function deactivates the actuation of the circulating pump (15), in particular the rotational speed regulating function, if the temperature measured by the target temperature sensor fulfills a pre-defined switching-off condition relative to the temperature measured by the store temperature sensor.

8. System according to one of the preceding claims, wherein the pump control function activates the actuation of the circulating pump (15), and in particular the rotational speed regulating function, if the temperature measured by the target temperature sensor (23) is greater than the temperature measured by the store temperature sensor (24) and/or a minimum temperature, and/or wherein the pump control function deactivates the actuation of the circulating pump (15), in particular of the rotational speed regulating function, if the temperature measured by the target temperature sensor is smaller than the temperature measured by the store temperature sensor (24) and/or a minimum temperature.

9. System according to one of the preceding claims, with a temperature switch-off function which interrupts the power supply to the electric continuous-flow heater (10) if the temperature measured by a temperature sensor exceeds a switch-off temperature, wherein the temperature sensor is preferably the target temperature sensor (23) and/or a store temperature sensor (24), wherein preferably a contactor (21) is provided, which is actuated by the temperature switching-off function, which further preferably is arranged in the connecting line between the home network (2) and the electric continuous-flow heater (10), and/or the temperature switching-off function is implemented through the heating control function, via the actuation of a power section (26), and/or wherein the temperature switching-off function preferably does not switch off the power supply to the circulating pump (15) and to the controller (18), and/or does not switch off or influence the actuation of the circulating pump (15) through the pumping control function.

10. System according to one of the preceding claims, wherein the system includes a power sensor (6) for the measurement of the power generated by the in-house energy generator (1), and/or the controller can be connected with such a power sensor, and/or wherein the system includes a display unit for displaying and/or visualizing the electrical power generated by the energy generator, and/or consumed by the consumers, and/or supplied to the electrical continuous-flow heater.

11. System according to one of the preceding claims, with a covering (34) for the hydraulic system and/or the controller (18) and/or the power section (26), wherein the covering is preferably a common covering, and/or the covering is preferably an insulation covering, and/or wherein the covering thermally insulates the controller relative to the electric continuous-flow heater and/or the power section.

12. System according to one of the preceding claims, which furthermore includes the power sensor (5) which is arrangeable between the home network and the public power grid.

13. Controller (18) for a system according to one of the preceding claims, with a pump control function for the actuation of the circulating pump (15), based on the measurement values of the target temperature sensor (23),
wherein the controller includes a heating control function for the actuation of the electrical power supplied to the electric continuous-flow heater (14), based on the measurement values of the power sensor (5), and/or the pump control function includes an rotational speed regulating function, which actuates the rotational speed of the circulating pump, based on the measurement values of the target temperature sensor, such that the temperature measured by the target temperature sensor corresponds to a pre-defined target temperature, wherein the controller can be connected with a store temperature sensor (24), and the pump control function undertakes the actuation of the circulating pump (15), based on the measurement values of the target temperature sensor (23) and the measurement values of the store temperature sensor (24), **characterized in that**
the pump control function activates the actuation of the circulating pump (15), in particular a rotational speed regulating function, if the temperature measured by the target temperature sensor fulfills a pre-defined switching-on condition relative to the temperature measured by the store temperature sensor, and/or **in that** the pump control function deactivates the actuation of the circulating pump (15), in particular a rotational speed regulating function, if the temperature measured by the target temperature sensor fulfills a pre-defined switching-off condition relative to the temperature measured by the store temperature sensor.

14. Controller (18) according to claim 13 with a power section (26), which is preferably configured as a separate component.

15. Domestic installation with a system according to the invention according to one of the preceding claims, which preferably furthermore includes a power sensor (5) connected between the home network and the public power grid, and/or a warm water store (20), and/or an in-house energy generator (1).

## Revendications

1. Système destiné à utiliser la puissance électrique mise à disposition par un générateur d'énergie (1) domestique pour le chargement d'un ballon d'eau chaude (20), comprenant :
un ballon d'eau chaude avec un capteur de température pour ballon,
une unité de chauffage électrique (10) équipée d'un circuit hydraulique pouvant être raccordé au ballon d'eau chaude, dans ledit circuit une pompe de circulation (15), un chauffe-eau instantané (14) électrique et un capteur de température cible (23) sont disposés, et
une commande (18) qui peut être reliée à un capteur de puissance (5), lequel est disposé entre un réseau domestique (2), auquel sont raccordés le générateur d'énergie domestique et un ou plusieurs consommateurs (8) domestiques, et un réseau électrique (3) public, et lequel mesure au moins la puissance apportée par le réseau domestique dans le réseau électrique public, ladite commande (18) comprenant une fonction de contrôle du chauffage pour commander la puissance électrique fournie au chauffe-eau instantané (14) électrique au moyen des valeurs mesurées du capteur de puissance (5) et une fonction de contrôle de pompe pour commander la pompe de circulation (15) au moyen des valeurs mesurées du capteur de température cible (23), la commande étant reliée au capteur de température pour ballon (24),
**caractérisé en ce que** la fonction de contrôle de pompe effectue la commande de la pompe de circulation (15) au moyen des valeurs mesurées du capteur de température cible (23) et des valeurs mesurées du capteur de température pour ballon (24).

2. Système selon la revendication 1, dans lequel la fonction de contrôle du chauffage, au moyen des valeurs mesurées du capteur de puissance (5), commande la puissance du chauffe-eau instantané (10) électrique de telle sorte qu'elle correspond pour l'essentiel à la puissance électrique fournie par le générateur d'énergie (1) domestique, non utilisée par les consommateurs (8) dans le réseau domestique, ou dans lequel la fonction de contrôle du chauffage comprend une fonction de régulation du chauffage, laquelle règle sur une valeur cible de zéro la puissance apportée par le réseau domestique (2) dans le réseau public (3) par l'intermédiaire de commande de la puissance électrique fournie au chauffe-eau instantané (10) électrique et/ou met à zéro la puissance électrique fournie au chauffe-eau instantané (10) électrique, lorsque la puissance consommée par les consommateurs (8) dépasse la puissance mise à disposition par le générateur d'énergie (1) domestique.

3. Système selon la revendication 1 ou 2, dans lequel la fonction de contrôle de pompe comprend une fonction de régulation de la vitesse de rotation, laquelle commande la vitesse de rotation de la pompe de circulation (15) au moyen des valeurs mesurées du capteur de température cible (23) de telle sorte que la température mesurée par le capteur de température cible (23) correspond à une température cible prédéterminée, la température cible étant de préférence réglable, et/ou le système comprenant un générateur de chaleur classique et la température cible se situant au-dessus de la température de consigne du générateur de chaleur classique afin de générer de la chaleur directement utilisable et d'économiser de l'énergie conventionnelle.

4. Système destiné à utiliser la puissance électrique mise à disposition par un générateur d'énergie (1) domestique pour le chargement d'un ballon d'eau chaude (20), comprenant :
un ballon d'eau chaude avec un capteur de température pour ballon, une unité de chauffage électrique (10) équipée d'un circuit hydraulique pouvant être raccordé au ballon d'eau chaude, dans lequel sont disposés une pompe de circulation (15), un chauffe-eau instantané (14) électrique et un capteur de température cible (23), et
une commande avec une fonction de contrôle de pompe pour commander la pompe de circulation (15) au moyen des valeurs mesurées du capteur de température cible (23), laquelle comprend une fonction de régulation de la vitesse de rotation, qui contrôle la vitesse de la pompe de circulation au moyen des valeurs mesurées du capteur de température cible de telle sorte que la température mesurée par le capteur de température cible correspond à une température cible prédéterminée, la commande étant reliée au capteur de température pour ballon (24),
et **caractérisé en ce que** la fonction de contrôle de pompe effectue la commande de la pompe de circulation (15) au moyen des valeurs mesurées du capteur de température cible (23) et des valeurs mesurées du capteur de température pour ballon (24).

5. Système selon la revendication 3 ou 4, **caractérisé en ce que** la fonction de régulation de la vitesse de rotation règle la vitesse de la pompe de circulation (15) au moyen des valeurs mesurées du capteur de température cible (23) au sein d'une plage de vitesse de rotation prédéterminée, une vitesse de rotation minimale et/ou une vitesse de rotation maximale étant notamment prédéterminées.

6. Système destiné à utiliser la puissance électrique mise à disposition par un générateur d'énergie (1) domestique pour le chargement d'un ballon d'eau chaude (20), comprenant :
une unité de chauffage électrique (10) équipée d'un circuit hydraulique pouvant être raccordé à un ballon d'eau chaude, dans lequel une pompe de circulation (15), un chauffe-eau instantané (14) électrique et un capteur de température cible (23) sont disposés, et
une commande qui peut être reliée à un capteur de puissance (5), lequel est disposé entre un réseau domestique (2), auquel sont raccordés le générateur d'énergie domestique et un ou plusieurs consommateurs (8) domestiques, et un réseau électrique public (3), et lequel capteur mesure au moins la puissance apportée par le réseau domestique dans le réseau électrique public,
ladite commande (18) comprenant une fonction de contrôle du chauffage pour commander la puissance électrique fournie au chauffe-eau instantané (14) électrique au moyen des valeurs mesurées du capteur de puissance (5) et une fonction de contrôle de pompe pour commander la pompe de circulation (15) au moyen des valeurs mesurées du capteur de température cible (23), la commande pouvant être reliée à un capteur de température pour ballon (24),
**caractérisé en ce que** la fonction de contrôle de pompe effectue la commande de la pompe de circulation (15) au moyen des valeurs mesurées du capteur de température cible (23) et des valeurs mesurées du capteur de température pour ballon (24), la fonction de contrôle de pompe activant le contrôle de la pompe de circulation (15) en particulier la fonction de régulation de la vitesse de rotation lorsque la température mesurée par le capteur de température cible remplit une condition d'activation prédéterminée par rapport à la température mesurée par le capteur de température pour ballon, de telle sorte que la fonction de contrôle de pompe désactive la commande de la pompe de circulation (15), en particulier la fonction de régulation de la vitesse, lorsque la température mesurée par le capteur de température cible remplit une condition de désactivation prédéterminée par rapport à la température mesurée par le capteur de température pour ballon.

7. Système destiné à utiliser la puissance électrique mise à disposition par un générateur d'énergie (1) domestique pour le chargement d'un ballon d'eau chaude (20), comprenant :
une unité de chauffage électrique (10) équipée d'un circuit hydraulique pouvant être raccordé au ballon d'eau chaude, dans lequel circuit sont disposés une pompe de circulation (15), un chauffe-eau instantané (14) électrique et un capteur de température cible (23), et
une commande avec une fonction de contrôle de pompe pour commander la pompe de circulation (15) au moyen des valeurs mesurées du capteur de température cible (23), laquelle comprend une fonction de régulation de la vitesse de rotation qui contrôle la vitesse de la pompe de circulation au moyen des valeurs mesurées du capteur de température cible de telle sorte que la température mesurée par le capteur de température cible correspond à une température cible prédéterminée, la commande pouvant être reliée à un capteur de température pour ballon (24), **caractérisé en ce que** la fonction de contrôle de pompe effectue la commande de la pompe de circulation (15) au moyen des valeurs mesurées du capteur de température cible (23) et des valeurs mesurées du capteur de température pour ballon (24), la fonction de contrôle de pompe activant la commande de la pompe de circulation (15) et en particulier la fonction de régulation de la vitesse, lorsque la température mesurée par le capteur de température cible remplit une condition d'activation prédéterminée par rapport à la température mesurée par le capteur de température pour ballon et/ou la fonction de contrôle de pompe désactivant le contrôle de la pompe de circulation (15), en particulier la fonction de régulation de la vitesse, lorsque la température mesurée par le capteur de température cible remplit une condition de désactivation prédéterminée par rapport à la température mesurée par le capteur de température pour ballon.

8. Système selon l'une quelconque des revendications précédentes, dans lequel la fonction de contrôle de pompe active la commande de la pompe de circulation (15) et en particulier la fonction de régulation de la vitesse, lorsque la température mesurée par le capteur de température cible (23) est supérieure à la température mesurée par le capteur de température pour ballon (24) et/ou à une température minimale, et/ou dans lequel la fonction de contrôle de pompe désactive la commande de la pompe de circulation (15), en particulier la fonction de régulation de la vitesse, lorsque la température mesurée par le capteur de température cible est inférieure à la température mesurée par le capteur de température pour ballon (24) et/ou ou à une température minimale.

9. Système selon l'une quelconque des revendications précédentes, comprenant une fonction de déconnexion de la température, laquelle interrompt l'alimentation de courant au chauffe-eau instantané (10) électrique lorsque la température mesurée par un capteur de température passe au-dessus d'une température de déconnexion, ledit capteur de température étant de préférence un capteur de température cible (23) et/ou un capteur de température pour ballon (24), un contacteur électrique (21) étant de préférence prévu, lequel est commandé par la fonction de déconnexion de la température et placé de préférence dans la ligne de connexion entre le réseau domestique (2) et le chauffe-eau instantané (10) électrique, et/ou la fonction de déconnexion de température étant mise en marche via la commande d'une unité de puissance (26) par la fonction de contrôle du chauffage, et/ou dans lequel la fonction de déconnexion de température ne déconnectant pas de préférence l'arrivée de courant à la pompe de circulation (15) et au contrôle (18) et/ou ne déconnectant et/ou influence pas la commande de la pompe de circulation (15) par la fonction de contrôle de pompe.

10. Système selon l'une quelconque des revendications précédentes, dans lequel ledit système comprend un capteur de puissance (6) pour mesurer la puissance générée par le générateur d'énergie (1) domestique et/ou dans lequel la commande peut être reliée à un tel générateur et/ou dans lequel le système comprend une unité d'affichage pour afficher et/ou visualiser la puissance électrique générée par le générateur d'énergie domestique et/ou consommée par les consommateurs et/ou fournie au chauffe-eau instantané électrique.

11. Système selon l'une quelconque des revendications précédentes, équipé d'un couvercle (34) pour le système hydraulique et/ou la commande (18) et/ou l'unité de puissance (26), ledit couvercle étant de préférence un couvercle commun et/ou de étant de préférence un couvercle isolant et/ou dans lequel de préférence le couvercle isole thermiquement la commande par rapport au chauffe-eau instantané électrique et/ou à l'unité de puissance.

12. Système selon l'une quelconque des revendications précédentes, lequel comprend également le capteur de puissance (5), qui peut être disposé entre le réseau domestique et le réseau électrique public.

13. Commande (18) pour un système selon l'une quelconque des revendications précédentes, équipée d'une fonction de contrôle de la pompe pour commander la pompe de circulation (15) au moyen des valeurs mesurées du capteur de température cible (23), ladite commande comprenant une fonction de contrôle du chauffage pour commander la puissance électrique fournie au chauffe-eau instantané (14) électrique au moyen des valeurs mesurées du capteur de puissance (5) et/ou la fonction de contrôle de la pompe comprenant une fonction de régulation de la vitesse de rotation qui contrôle la vitesse de la pompe de circulation au moyen des valeurs mesurées du capteur de température cible de telle sorte que la température mesurée par le capteur de température cible correspond à une température cible prédéterminée, la commande pouvant être reliée à un capteur de température pour ballon (24) et la fonction de contrôle de la pompe effectue la commande de la pompe de circulation (15) au moyen des valeurs mesurées du capteur de température cible (23) et des valeurs mesurées du capteur de température pour ballon (24),
**caractérisé en ce que**
la fonction de contrôle de la pompe active la commande de la pompe de circulation (15) en particulier une fonction de régulation de la vitesse, lorsque la température mesurée par le capteur de température cible remplit une condition d'activation prédéterminée par rapport à la température mesurée par le capteur de température pour ballon et/ou **en ce que** la fonction de contrôle de la pompe désactive la commande de la pompe de circulation (15), en particulier une fonction de régulation de la vitesse, lorsque la température mesurée par le capteur de température cible remplit une condition de désactivation prédéterminée par rapport à la température mesurée par le capteur de température pour ballon.

14. Contrôleur (18) selon la revendication 13, **caractérisée en ce qu'**il comprend une unité de puissance (26), laquelle est de préférence conçue sous forme d'une unité de construction séparée.

15. Installation domestique équipée d'un système conforme à l'invention selon l'une quelconque des revendications précédentes, lequel comprend également de préférence un capteur de puissance (5) raccordé entre le réseau domestique et le réseau électrique public et/ou un ballon d'eau chaude (20) et/ou un générateur d'énergie (1) domestique.
